# EUROPEAN PATENT APPLICATION

(11) **EP 1 922 922 A1**
(43) Date of publication of application: **21.05.2008**
(21) Application number: 06023652.8
(22) Date of filing: 14.11.2006
(51) Int. Cl.: A01K 85/00

(54) **Fishing lure and bait structure**

(71) Applicant: Wong,, Tommy Chi-Kin, Kowloon Bay Hong Kong (CN)
(72) Inventor: Wong,, Tommy Chi-Kin, Kowloon Bay Hong Kong (CN)
(74) Representative: Haft, von Puttkamer, Berngruber

(57) **Abstract**

The invention refers to a "fishing lure and bait structure" that comprises a fishing lure and bait body of an arc-shaped bar, which is cracks easily and produces the vibrations at the area near its arc center when it is bitten by the fish; this produces biomimetic movements such as wiggling irregularly along the waves while floating on the water surface and sinking underwater by non-linearity; its core and periphery are made of materials of different densities and water absorbencies to achieve self-movements while being thrown out into the water or bitten by the fish; this can further resemble the characteristics of insect shells or fish bones to produce the vibration waves of shells crashing or bones cracking so as to attract the fish to pursue the bait.

## Description

### BACKGROUND OF THE INVENTION

### I. Field of the Invention

The invention relates to a "fishing lure and bait structure," which, in particular, attracts predatory fish to feed on the bait.

### II. Description of the Prior Art

In the present-day aquaculture, the general formulated fishing bait, which only floats on the surface of the water or sinks underwater due to its granular, laminate, or bar structure, is unable to produce effects such as self-movement, sound, bone cracking, or shell crashing to attract predatory fish to feed on the bait.

### SUMMARY OF THE INVENTION

The objective of the invention is to provide a "fishing lure and bait structure" which provides the fishing bait that accommodates the lifestyle habits and natural instincts of both regular fish and predatory fish to feed on the bait.

In order to achieve the foregoing objective, the invention adopts the technology as follows: a structure of fishing lure and bait comprises of a fishing lure and bait body of C-arc structure.

The said C-arc structure is in a bar or lamination shape.

The said arc structure is in an "S" shape that connects more than 2 C-arc substances.

The said C-arc structure has a radian of 120°-270°.

The said C-arc structure has a radian of 150°-210°.

The extrados and intrados of the said C-arc structure are respectively composed of more than two laminations of different materials.

The said C-arc structure is in a twisted shape.

The said fishing lure and bait structure is composed of more than two laminations and the material of each lamination has different density.

The said structure of fishing lure and bait is composed of more than two laminations and the material of each lamination has different water absorption capacities.

The said fishing lure and bait structure is in a columnar shape, where the core and peripheral portions are respectively composed of more than two laminations and the material of each lamination has different density and water absorption capacities.

The said C-arc of the fishing lure and bait structure comprises of a series of teeth on the flanks.

The foregoing teeth may also be installed on the intrados and extrados of the C-arc of the fishing lure and bait structure of the invention.

The said fishing lure and bait body is in a plane shape, which is composed of more than two laminations, and the material of each lamination has a different density.

Each lamination of the said fishing lure and bait structure is made of formulated material of different water absorption capacities.

Compared to the technology of the prior art, the technology that the invention adopts allows the "fishing lure and bait structure" to be an arc-shaped biomimetic, which cracks and produces vibration waves from the area near the arc center while being bitten by the fish; it then wiggles irregularly along the waves while floating on the surface of the water; next, it sinks underwater by non-linearity so as to better attract the fish to feed on the bait. In addition, the surface and lining laminations are made of materials of different water absorbency and density so as to produce self-movement when the "fishing lure and bait structure" is thrown out into the water. In addition, it resembles the characteristics of insect shells or fish bones based on real insects and fish so as to stimulate a fish's appetite.

### BRIEF DESCRIPTION OF THE DRAWINGS

Fig. 1 is the structural view of the present invention.
Fig. 2 is a sectional view showing the present invention of a C-arc structure at a radian of 180°.
Fig. 2-1 is a sectional view showing the present invention of a C-twisted structure.
Fig. 3 is a sectional view showing the present invention of a C-arc structure at the minimum radian of 120°.
Fig. 3-1 is a sectional view showing changes in the water of the present invention in the structure of Fig. 3.
Fig. 4 is a sectional view showing the present invention of a C-arc structure at the maximum radian of 170°.
Fig. 4-1 is a sectional view showing changes in the water of the present invention in the structure of Fig. 4.
Fig. 5 is a sectional view showing the present invention of a plane structure composed of more than two laminations of different material densities.
Fig. 5-1 is a sectional view showing changes in the water of the present invention in the structure of Fig. 5.
Fig. 6 is a sectional view of the present invention of am S shape.
Fig. 7 is a sectional view of the present invention of a shrimp-like shape.
Fig. 8 is a sectional view of the present invention of a fish shape.
Fig. 9 and 9-1 are a sectional view of the present invention of a column shape (worm shape).
Fig. 10 is a cross-sectional view showing the present invention in the structure of A-A, Fig.1.
Fig.11 is a structural view of the present invention comprising of teeth on the intrados.
Fig. 12 is a structural view of the present invention comprising of teeth on the extrados.
Fig. 13 is a structural view of the present invention comprising of teeth on both the extrados and intrados.

### DESCRIPTION OF THE PREFERRED EMBODIMENT

Further structures, installations, and desirable features of the invention will be better understood from the detailed description and drawings that follow in which the embodiment of the disclosed invention is illustrated by way of example.

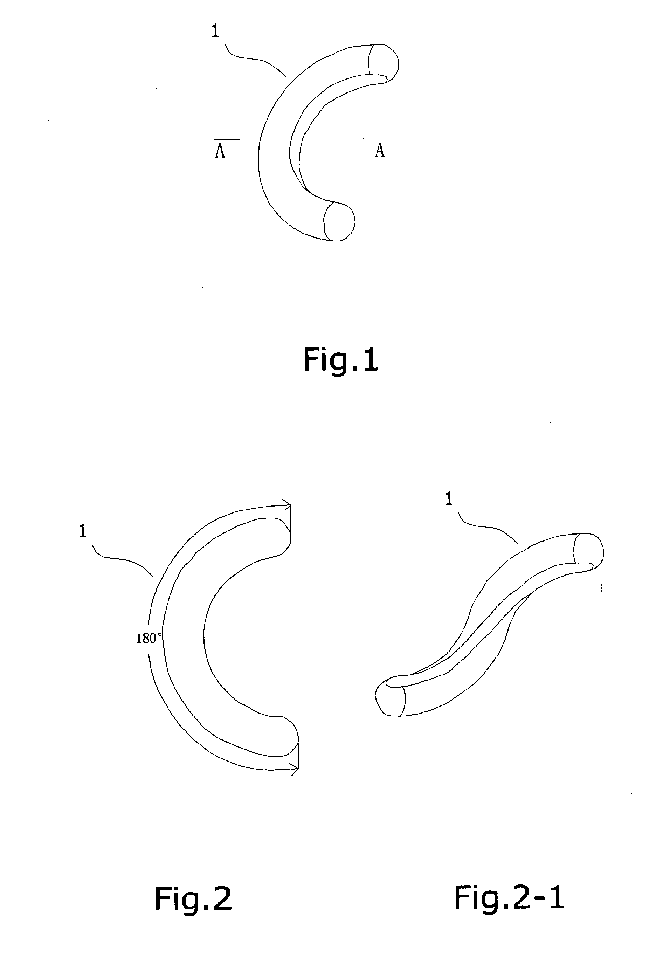

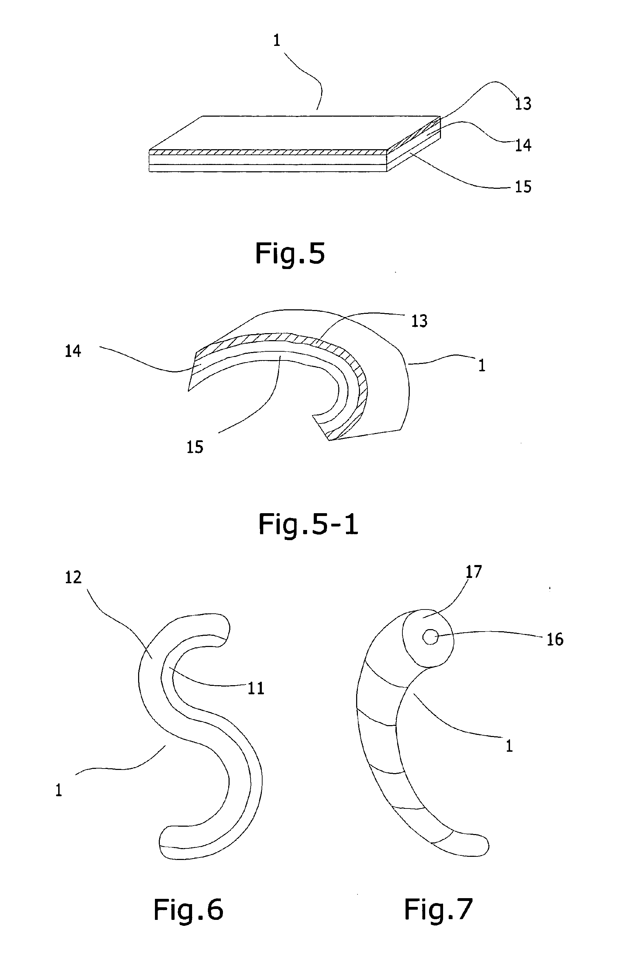

With reference to Fig. 1, 2, 3, 3-1, 4, and 4-1, the "fishing lure and bait structure" of the invention mainly comprises of a fishing lure and bait body 1, which can, be a C-shaped bar or lamination (Fig. 5-1), or can be an S-shaped bar by connecting two C-shaped substances (Fig. 6) or lamination. In addition, the intrados and extrados of the said C-shaped body are respectively composed of more than two laminations and the material of each lamination has its particular formula and density.

The fishing lure and bait body 1 of the invention, which is a C-shaped structure, has a larger radian that may reach up to 120°-270°; nevertheless, a radian of 150°-210° or around 180° should be the favorable ranges that achieve the optimal shape variations of the fishing lure and bait body in the water. The fishing lure and bait body 1 of the invention may also be a twisted C-shape (Fig. 2-1), which better produces the vibration waves of bones cracking or shells crashing in the water so as to stimulate the fish's appetite.

The material-laminated extrados of the fishing lure and bait body 1 of the invention may have a higher or lower density or water absorbency than that of the intrados.

With reference to Fig. 5, the fishing lure and bait body 1 of the invention is in a plane shape, which is composed of more than two laminations 13, 14, 15. The material formula can be customized to progressively increase the density and water absorbency by lamination, and vice versa.

With reference to Fig. 5, the fishing lure and bait body is in a plane shape and can curl in the water because the side encompassing a higher material density contracts (Fig.5-1). This is achieved by applying materials of different densities inside and outside the said fishing lure and bait body to cause a delay while materials of two sides simultaneously absorb water so as to make the radian change. Consequently, the fishing lure and bait body 1 can move and become active and animate to attract the fish to feed on the bait. The density of the two sides of the fishing lure and bait body can be controlled by changing the pressure while pressing out the fish bait or by applying two sides with materials of different water absorbencies.

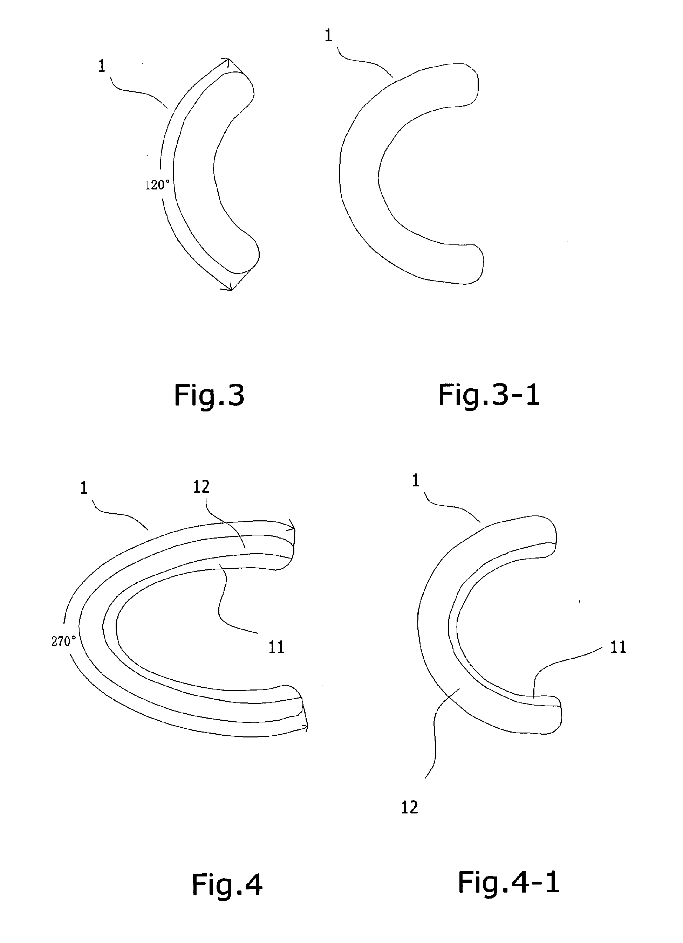

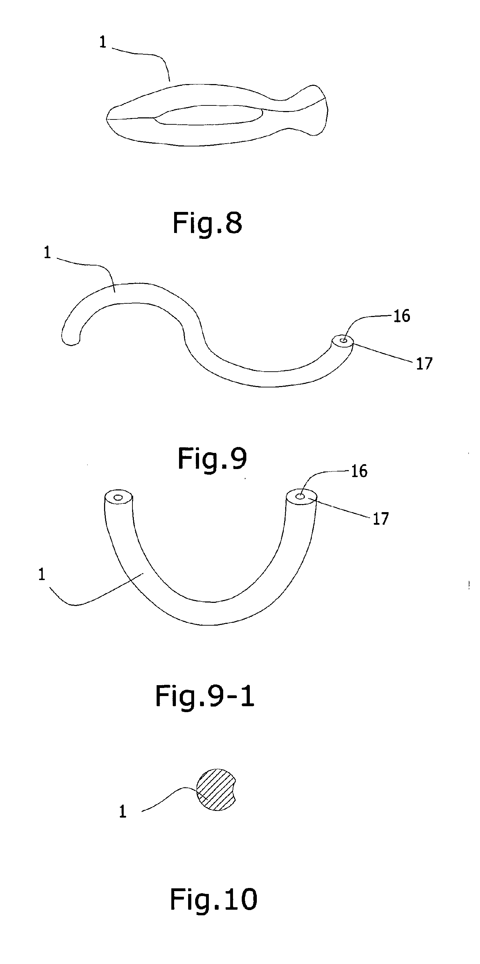

The fishing lure and bait body 1 of the invention may adopt the uni-laminate arc structure (Fig. 1, 2, 3), multi-laminate arc structure (Fig. 4, 5, 6), or bar structure, where the core 16 and peripheral 17 are made of different ingredients (Fig.7, 9).

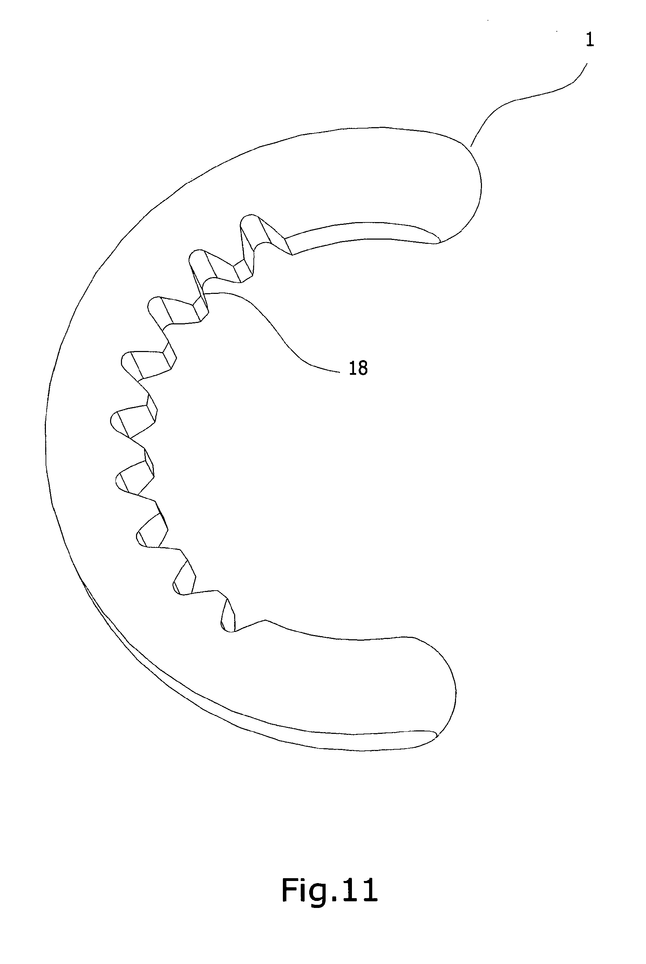

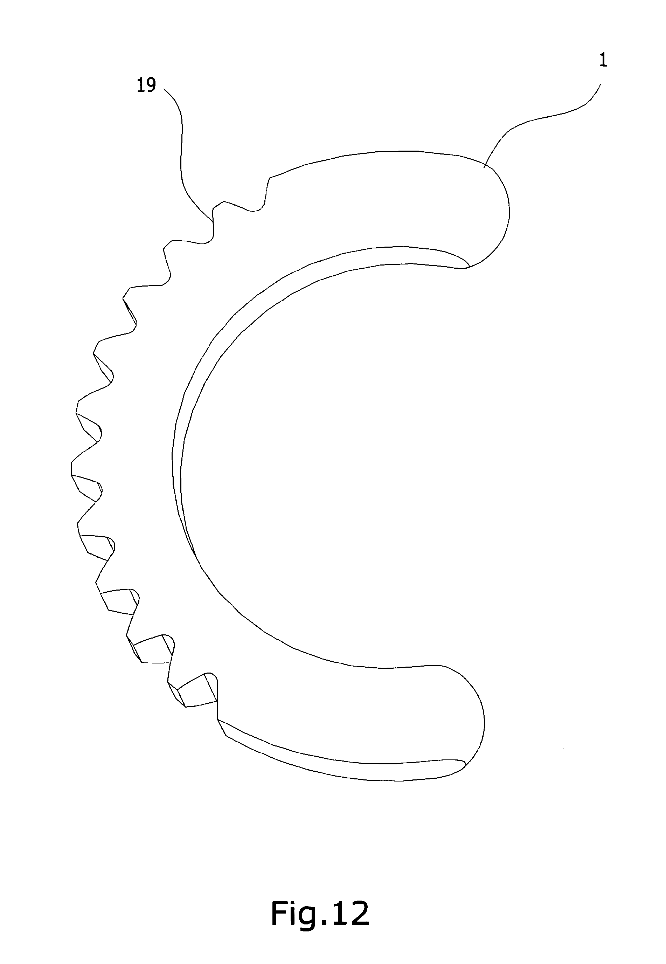

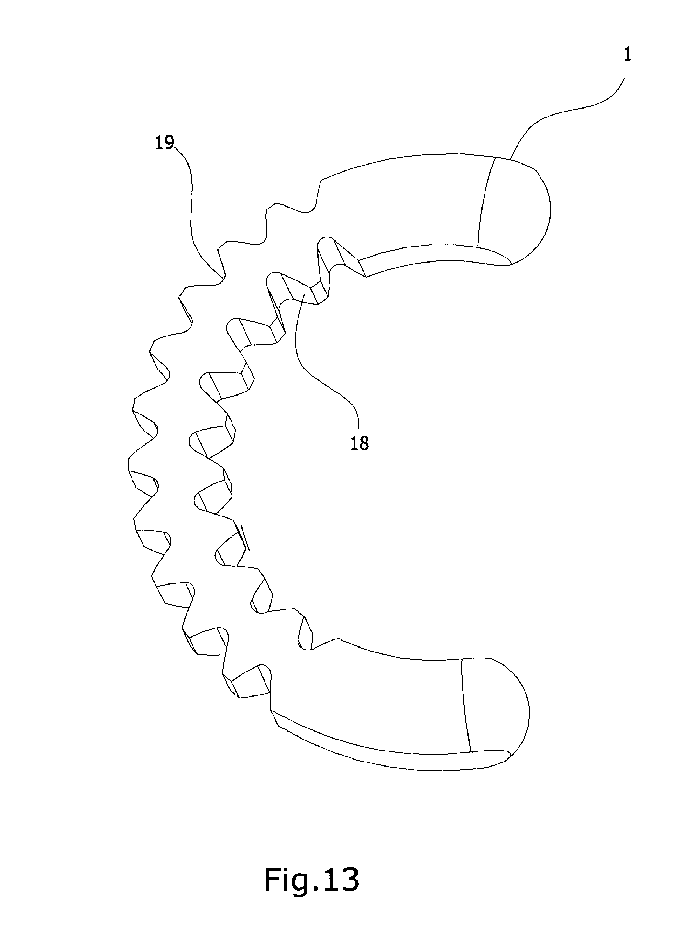

With reference to Fig. 11, 12, and 13, the fishing lure and bait body 1 of the invention possesses a series of teeth 18, 10 on the flanks, intrados, extrados, or any sides of the C-arc structure to quickly absorb the water so as to produce self-movements in the water, which attracts the fish to feed on the bait.

The biomimetic appearances of fish, insect, shrimp, and so on (Fig. 7, 8, 9) are also applicable to the fishing lure and bait body 1 of the invention.

Where the fishing lure and bait body 1 of the invention is of an arc-shaped bar, the area closest to its arc center cracks easily and produces the vibrations that makes the structure of the fishing lure and bait produce biomimetic movements such as wiggling irregularly along the waves while floating on the water surface and sinking underwater by non-linearity so as to better attract predatory fish to feed on the bait. The fishing lure and bait body 1 of the invention are also of the plane lamination or biomimetic form, which has materials of different densities on the inside and outside that achieve movement and action as the side with higher density contracts to change the radian due to different water absorbency speeds when materials of two sides simultaneously absorb water. When the side with slower water absorbency is pressed, it cracks and produces the sound wave of shells crashing that attracts the fish to feed on the bait. The density inside and outside the fishing lure and bait body can be controlled by changing the pressure while pressing out the fish bait or by applying materials of different water absorbencies. The fishing lure and bait body is in a columnar shape, its core and peripheral are respectively made of materials of different water absorbencies and densities to resemble the characteristics of insect shells or fish bones. Therefore, the fishing lure and bait body is able to produce the vibration waves of bones cracking or shells crashing so as to stimulate the fish's appetite while being bitten by the fish.

To sum up, the "fishing lure and bait structure" of the invention has the advantages of elevating utilization efficiency and the convenience of the grinder so as to possess the "practicability" and "advancement" in the industry field. In addition, the "fishing lure and bait structure" of the invention has never been disclosed in any publications nor is its utilization made known to the public prior to submission of this application. Therefore, the invention conforms to requirements of the new utility model and this patent application is submitted according to the Patent Act.

## Claims

1. A "fishing lure and bait structure," the characteristic lies in: the fishing lure and bait body is a C-arc structure.

2. The "fishing lure and bait structure" of claim 1, the characteristic lies in: the C-arc structure is in a bar or lamination shape.

3. The "fishing lure and bait structure" of claim 1 or 2, the characteristic lies in: the structure of the fishing lure and bait is in an S shape that connects more than two C-shaped substances.

4. The "fishing lure and bait structure" of claim 1, the characteristic lies in: radians of the C-arc structure of the fishing lure and bait are 120°-270°.

5. The "fishing lure and bait structure" of claim 4, the characteristic lies in: radians of the C-arc structure of the fishing lure and bait are 150°-210°.

6. The "fishing lure and bait structure" of claim 4 or 5, the characteristic lies in: the intrados and extrados of the C-arc structure are respectively composed of more than two laminations, which are made of different materials.

7. The "fishing lure and bait structure" of claim 4 or 5, the characteristic lies in: the C-arc structure is in a C-twisted shape.

8. The "fishing lure and bait structure" of claim 1 or 2, the characteristic lies in: the fishing lure and bait is composed of more than two laminations of different material densities.

9. The "fishing lure and bait structure" of claim 1 or 2, the characteristic lies in: the fishing lure and bait is composed of more than two laminations of different water absorbencies.

10. The "fishing lure and bait structure" of claim 3, the characteristic lies in: the fishing lure and bait is in a columnar shape where the core and peripheral are respectively composed of more than two laminations that have different material densities or water absorbencies.

11. The "fishing lure and bait structure" of claim 1 or 2, the characteristic lies in: the C-arc structure of the fishing lure and bait has a series of teeth on the flanks.

12. The "fishing lure and bait structure" of claim 11, the characteristic lies in: the series of teeth that the C-arc structure has on the flanks can also be installed on the intrados and extrados.

13.A "fishing lure and bait structure," the characteristic lies in: the fishing lure and bait body is in a plane shape that is composed of more than two laminations of different material densities.

14. The "fishing lure and bait structure" of claim 13, the characteristic lies in: each lamination of the fishing lure and bait is made of a formulated material that has a particular water absorbency.
